(19) Europäisches Patentamt
European Patent Office
Office européen des brevets

(11) **EP 1 664 961 B1**

(12) **EUROPÄISCHE PATENTSCHRIFT**

(45) Veröffentlichungstag und Bekanntmachung des Hinweises auf die Patenterteilung:
**21.12.2011 Patentblatt 2011/51**

(21) Anmeldenummer: **04762757.5**

(22) Anmeldetag: **01.09.2004**

(51) Int Cl.:
*H02J 3/18* *(2006.01)*       *G05F 1/455* *(2006.01)*

(86) Internationale Anmeldenummer:
**PCT/DE2004/001972**

(87) Internationale Veröffentlichungsnummer:
**WO 2005/031487 (07.04.2005 Gazette 2005/14)**

(54) **VORRICHTUNG ZUM EINSTELLEN DER IMPEDANZ EINER WECHSELSTROM FÜHRENDEN HOCHSPANNUNGSLEITUNG**

DEVICE FOR ADJUSTING THE IMPEDANCE OF A HIGH VOLTAGE LINE SUPPLYING AN ALTERNATING CURRENT

DISPOSITIF PERMETTANT DE REGLER L'IMPEDANCE D'UNE LIGNE A HAUTE TENSION FOURNISSANT UN COURANT ALTERNATIF

(84) Benannte Vertragsstaaten:
**CH LI**

(30) Priorität: **23.09.2003 DE 10345020**

(43) Veröffentlichungstag der Anmeldung:
**07.06.2006 Patentblatt 2006/23**

(73) Patentinhaber: **SIEMENS AKTIENGESELLSCHAFT**
**80333 München (DE)**

(72) Erfinder:
• **BREUER, Wilfried**
**91054 Erlangen (DE)**

• **PEREIRA, Marcos**
**91056 Erlangen (DE)**
• **SADEK, Kadry**
**91056 Erlangen (DE)**

(56) Entgegenhaltungen:
**EP-A- 0 951 126       EP-B- 0 258 314**
**DE-A- 19 619 305     US-B1- 6 274 851**

• **BAYER W ET AL: "DYNAMISCHE WIRK- UND BLINDLEISTUNGSFUHRUNG FUR HOHERE UBERTRAGUNGSLEISTUNG" ELEKTROTECHNISCHE ZEITSCHRIFT - ETZ, VDE VERLAG GMBH. BERLIN, DE, Bd. 111, Nr. 10, 1. Mai 1990 (1990-05-01), Seiten 512-515, XP000127884 ISSN: 0948-7387**

**Beschreibung**

Die Erfindung betrifft eine Vorrichtung zum Einstellen der Impedanz einer Wechselstrom führenden aus mehreren Phasen bestehenden Hochspannungsleitung mit wenigstens einer in Reihenschaltung in die Hochspannungsleitung einfügbaren Regelspule und mit wenigstens einer jeweils einer der Regelspulen zugeordneten Schalteinrichtung, wobei eine Steuerungseinheit zum Steuern jeder Schalteinrichtung auf eine Weise vorgesehen sind, dass durch das Schalten der Schalteinrichtung die in der Vorrichtung wirkende Reaktanz der Regelspule einstellbar ist.

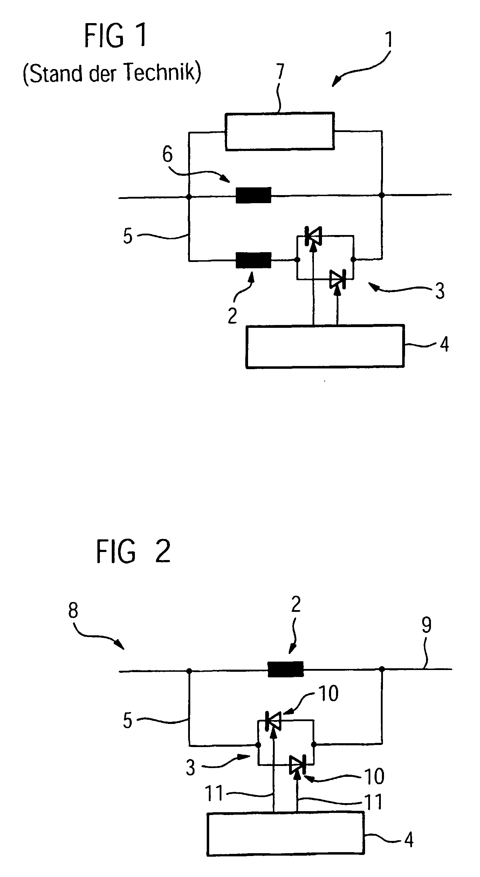

Eine solche Vorrichtung ist aus der DE 37 87 335 T2 bekannt. Die dort offenbarte Vorrichtung ist ferner in Figur 1 der beigefügten Zeichnung verdeutlicht. Die vorbekannte Vorrichtung 1 weist eine Regelspule 2 und eine nicht geregelte Spule 6 auf, die durch zweckmäßige in Figur 1 nicht gezeigte Anschlüsse oder Schalter in Reihe in eine Wechselstrom führende Hochspannungsleitung einfügbar ist. Zum Regeln der in der Vorrichtung 8 wirkenden Impedanz der Regelspule 2 ist eine Schalteinrichtung 3 vorgesehen, die durch zwei gegensinnig geschaltete Thyristoren realisiert ist. Die Thyristoren sind mit einer Steuerungseinheit 4 verbunden, durch deren Steuerungssignale der Stromfluss über die Thyristoren unterbrochen beziehungsweise ermöglicht wird. Durch zweckmäßige Wahl des Zeitpunktes zur Zündung der Thyristoren in Abhängigkeit der Phase eines Wechselstromes in der Hochspannungsleitung ist die in der Vorrichtung wirksame Impedanz der Regelspule 2 und somit die Impedanz der gesamten Vorrichtung einstellbar. Dieser von der Phase des Wechselstromes abhängige Ansprechzeitpunkt der Thyristoren wird im Folgenden als Zündwinkel bezeichnet. Durch die statische Stromunterbrechung des Wechselstromes durch die Thyristoren des Regelungszweiges 5 werden auch höhere Ordnungen, also ganzzahlige Vielfache der Grundschwingung des Wechselstromes erzeugt. Aus diesem Grund ist parallel zum Regelungszweig 5 eine Filtereinheit 7 vorgesehen, die zum Unterdrücken einer oder mehreren dieser harmonischen Schwingungsanteile eingerichtet ist. Darüber hinaus dienen die Filtereinheit und die Filterspule 6 zum Erhalt des Stromweges durch die Vorrichtung, wenn sich die Schalteinrichtung 3 in einer den Stromfluss unterbrechenden Stellung befindet. Durch diese zusätzlichen Komponenten ist die vorbekannte Vorrichtung jedoch raumgreifend und kostenintensiv. Darüber hinaus sind die Regelungsmöglichkeiten der vorbekannten Vorrichtung begrenzt, da deren Impedanz nicht auf Null sondern lediglich auf die Impedanz der parallel geschalteten Spulen 2 und 6 heruntergefahren werden kann.

Aus der US 6,274,851 B1 ist ein so genannter Flickerkompensator bekannt geworden, der in so genannten Lichtbogenöfen eingesetzt wird. Der Lichtbogenofen verfügt über zwei Elektroden, zwischen denen ein Lichtbogen brennen kann. Der extrem heiße Lichtbogen dient zum Schmelzen von Metall vorgeshen. Zur Erzeugung des Lichtbogens werden die Elektroden durch ei-ne Energieversorgung mit elektrischer Energie versorgt. Der flackernde Lichtbogen kann Spannungs- und Stromfluktuationen in die Energieversorgung, beispielsweise ein Energieversorgungsnetz, einspeisen. Zur Kompensation dieser Spannungs- und Stromeinbrücke ist ein Flickerkompensator vorgesehen, der zwischen einem netzseitigen und einem elektrodenseitigen Transformator des Lichtbogenofens angeordnet ist. Der Flickerkompensator weist eine Überbrückungsdrossel sowie einen Überbrückungskondensator auf, die jeweils parallel zu zwei gegensinnig parallel zueinander geschalteten Leistungshalbleiterschaltern angeordnet ist. Die Leistungshalbleiterschalter sind mit einer Regelungseinheit verbunden, der dafür sorgt, dass der Blindstrom des Lichtbogenofens im Wesentlichen konstant bleibt.

Aufgabe der vorliegenden Erfindung ist es, eine Vorrichtung der eingangs genannten Art bereit zu stellen, die kompakt und kostengünstig ist, mit der die Impedanz einer Hochspannungsleitung auf einfache Art und Weise gesteuert werden kann.

Die Erfindung löst diese Aufgabe dadurch, dass jede Schalteinrichtung parallel zu der ihr zugeordneten Regelspule in einem Parallelzweig angeordnet ist, wobei die Steuerungseinheit eine mit Stromgebern verbundene Nulldurchgangseinheit zum Nachweis eines Nulldurchgangs des Wechselstroms und wenigstens eine mit einem Zündwinkelgeber verbundene Auslöseeinheit aufweist und wobei der Zündwinkelgeber mit einem Stromgeber zum Messen des Wechselstroms und mit einem Spannungsgeber zum Messen der Spannung der Hochspannungsleitung gegenüber dem Erdpotential oder der Spannungen zwischen den Phasen verbunden ist, wobei die Steuerungseinheit über ein Festspeicherelement verfügt, das zur Aufnahme von Stellparametern vorgesehen ist, wobei wenigstens eine Abgleicheinheit zum Feststellen von Abweichungen zwischen den Stellparametern und den Messwerten des Strom- und/oder des Spannungsgebers oder zwischen den Stellparametern und aus den Messwerten des Strom- und/oder Spannungsgebers berechneten Messgrößen vorgesehen ist.

Erfindungsgemäß ist die Regelungsspule nicht mehr wie im Stand der Technik in Reihenschaltung zur Schalteinrichtung angeordnet. Vielmehr ist die Regelungsspule durch die Schalteinrichtung überbrückbar, womit ein gegenüber dem Stand der Technik abweichendes erfindungsgemäßes Regelungsverfahren verknüpft ist. Durch die erfindungsgemäße Schaltanordnung ist es ferner möglich, auf zusätzliche, nicht geregelte Spulen oder Filtereinheiten nahezu vollständig zu verzichten. Es sei darauf hingewiesen, dass eine Regelspule im Sinne der Erfindung nicht als ein einziges Bauteil realisiert sein muss. Vielmehr ist es erfindungsgemäß auch möglich, mehrere Spulen in dem jeweiligen Parallelzweig in Reihe zu schalten. In diesem Fall ist unter dem Begriff "Regelspule" die Summe aller Spulen in den Parallelzweig zu verstehen.

Erfindungsgemäß weist die Steuerungseinheit eine mit Stromgebern verbundene Nulldurchgangseinheit zum Nachweis eines Nulldurchgangs des Wechselstromes und wenigstens eine mit einem Zündwinkelgeber verbundene Auslöseeinheit auf. So kann der Stromgeber beispielsweise ein digitale Stromwerte abgebender Stromgeber sein, der einen Stromwandler zum Erzeugen eines zum Wechselstrom proportionalen Sekundärstromes, eine Abtasteinrichtung zum Abtasten des Sekundärstromes in einem Abtasttakt unter Gewinnung von Stromwerten und einen Analog-Digital-Wandler zum Umwandeln der abgetasteten Stromwerte in digitale Stromwerte aufweist. Ein Vorzeichenwechsel der digitalen Stromwerte wird beispielsweise durch eine hierfür übliche Software der Nulldurchgangseinheit erkannt, die daraufhin einen Nulldurchgangssignal an die mit ihr in Verbindung stehende Auslöseeinheit sendet. Die Auslöseeinheit ist über den Zündwinkelgeber mit einem Zündwinkel versorgt. Dieser Zündwinkel entspricht einer Zeitdauer, nach der die Auslöseeinheit im Anschluss an einen Nulldurchgang des Wechselstroms ein Zündsignal zum Zünden der Thyristoren an diese sendet. Durch die Wahl des Zündwinkels ist somit eine beliebige Phasenverschiebung zwischen dem Nulldurchgang des Wechselstromes und der Stromüberbrückung durch die Thyristoren ermöglicht.

Bei einem von hier abweichenden Ausführungsbeispiel ist die Steuereinheit als analoge Steuereinheit mit diesbezüglich üblichen dem Fachmann bekannten Bauteilen realisiert.

Der Zündwinkelgeber ist erfindungsgemäß mit einem Stromgeber zum Messen des Wechselstroms und mit einem Spannungsgeber zum Messen der Spannung der Hochspannungsleitung gegenüber dem Erdpotential oder der Spannungen zwischen den Phasen verbunden, wobei die Steuerungseinheit weiterhin über ein Festspeicherelement verfügt, das zur Aufnahme von Stellparametern vorgesehen ist, wobei wenigstens eine Abgleicheinheit zum Feststellen von Abweichungen zwischen den Stellparametern und den Messwerten des Stromgebers und/oder des Spannungsgebers oder zwischen den Stellparametern und Messgrößen, die aus den Messwerten des Strom- und/oder Spannungsgebers berechnet sind, vorgesehen ist. Mit anderen Worten ist jede Abgleicheinheit mit einem oder mehreren Sollwerten versehen, die beispielsweise einem Sollstromwert, einem Sollspannungswert oder beispielsweise einem aus diesen beiden elektrischen Größen berechneten Sollwert einer Wirk- oder Blindleistung entsprechen. Stellt die jeweilige Abgleicheinheit eine den Toleranzbereich überschreitende Differenz zwischen den jeweils gemessenen Ist- und Sollwerten oder zwischen den aus den gemessenen Größen berechneten Istwerten und den Sollwerten fest, bewirkt sie eine Verschiebung des Zündwinkels in eine solche Richtung, dass die Abweichung zwischen dem Ist- und dem Sollwert wieder in den Toleranzbereich hinein verschoben wird. Der Toleranzbereich ist von der jeweiligen Anwendung der Vorrichtung abhängig und beträgt typischerweise 1 % bezogen auf den jeweiligen Sollparameter.

Vorteilhafterweise weist die erfindungsgemäße Vorrichtung einen Parallelzweig auf, der frei von induktiven Bauteilen wie Spulen oder dergleichen ist auch wenn diese lediglich zur Unterdrückung von transienten Effekte vorgesehen sind und keinen Einfluss auf die Regelungscharakteristik nehmen.

Als Schalteinheit kommt beispielsweise ein schneller mechanischer Schalter in Betracht. Zweckmäßigerweise besteht jedoch wenigstens eine Schalteinrichtung aus gegensinnig geschalteten Thyristoren. Durch die Verwendung von Thyristoren sind die Regelungsmöglichkeiten der Impedanz durch die Steuerungseinheit verbessert. Die Thyristoren werden erfindungsgemäß beispielsweise als schneller Schalter eingesetzt. Ihr Schaltverhalten ist über sogenannte elektrische oder optische Zündsignale und somit auf besonders einfache Weise an die jeweils erforderlichen Umstände anpassbar. Als Thyristoren eignen sich alle bislang bekannten hochspannungstauglichen Halbleiterbauteile auf Silizium oder aber auch Carbid-Basis. Beispiele geeigneter Silizium-Thyristoren umfassen elektrisch gezündete Thyristoren, optisch gezündete Thyristoren, sogenannte GTO's aber auch IGBT's.

Gemäß einer zweckmäßigen Weiterentwicklung ist die erfindungsgemäße Vorrichtung mit zwei in Reihe angeordneten Regelspulen versehen, die jeweils eine in einem Parallelzweig angeordnete Schalteinrichtung in einer Parallelschaltung aufweisen. Gemäß dieser vorteilhaften Weiterentwicklung ist es möglich, im Vergleich zu Vorrichtungen mit einer überbrückbaren Regelspule weniger raumgreifende Hochspannungsbauteile zur Ausbildung der Gesamtvorrichtung einzusetzen. Weiterhin wird der harmonische Anteil der an der Vorrichtung abfallenden Spannung im Vergleich zu einer Vorrichtung mit lediglich einer regelbaren Reaktanz herabgesetzt.

Gemäß einer diesbezüglichen zweckmäßigen Weiterentwicklung weist die Steuerungseinheit zwei Auslöseeinheiten auf, die jeweils mit einer Schalteinrichtung zusammenwirken. Die Steuerungseinheit ist ferner mit zwei unterschiedlichen Zündwinkelgebern verbunden, so dass die Zündung der Schalteinrichtungen zeitlich unabhängig voneinander regelbar ist.

Bei dieser Ausgestaltung ist eine Weiterentwicklung dahin möglich, dass lediglich eine der Schalteinrichtungen gegensinnig geschaltete Thyristoren aufweist, wobei die andere Schalteinrichtung als mechanischer Schalter realisiert ist. Auf diese Weise werden die Regelungsmöglichkeiten der Vorrichtung zwar herabgesetzt. Eine solche Variante ist jedoch kostengünstig und hinsichtlich der Steuerungsmöglichkeit vereinfacht.

Vorteilhafterweise ist ein in Reihe zur Regelspule geschalteter Kondensator vorgesehen, der mittels einer parallel zum Kondensator in einem Kondensatorparallelzweig angeordneten Kondensatorschalteinheit überbrückbar ist. Durch den Zusatz eines Kondensators in Reihenschaltung wird der durch die Vorrichtung regelbare Bereich der Impedanz beträchtlich vergrößert. Gemäß dieser vorteilhaften Weiterentwicklung der Erfindung sind zwei regelbare Reaktanzbereiche bereitgestellt, wobei jedoch lediglich eine gemeinsame Steuerung zum Regeln der Gesamtimpedanz erforderlich ist. Selbstverständlich ist die Reihenanordnung von regelbaren Reaktanzen auch durch weitere solcher in Reihenschaltung angeordnete Module erweiterbar. Gemäß einer diesbezüglichen zweckmäßigen Weiterentwicklung ist eine Filtereinheit vorgesehen, die parallel zu einem die Regelspule und den Kondensator in Reihenschaltung aufweisenden Reihenzweig angeordnet. Die Filtereinheiten können nur dann eingesetzt werden, wenn neben wenigstens einer Regelspule auch ein Kondensator oder eine Spule in der überbrückten Reihenschaltung vorgesehen ist.

Gemäß einer vorteilhaften Weiterentwicklung der erfindungsgemäßen Steuerungseinheit ist wenigstens einer der Schalteinrichtungen durch gegensinnig geschaltete Thyristoren realisiert. Selbstverständlich können auch alle Schalteinrichtungen aus gegensinnig geschalteten Thyristoren bestehen.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleich wirkende Bauteile mit gleichen Bezugszeichen versehen sind und wobei

| | |
|---|---|
| Figur 1 | eine gattungsgemäße Vorrichtung gemäß dem Stand der Technik zeigt, |
| Figur 2 | ein Ausführungsbeispiel der erfindungsgemäßen Vorrichtung zeigt, |
| Figur 3 | die Wirkungsweise der Vorrichtung gemäß Figur 2 anhand zeitlich aufgelöster Strom- oder Spannungskurven schematisch verdeutlicht, |
| Figur 4 | die Reaktanz der Vorrichtung gemäß Figur 2 bezogen auf die Reaktanz der Regelspule in Abhängigkeit des Zündwinkels zeigt, |
| Figur 5 | die an der Vorrichtung abfallende Grundschwingungskomponente der Spannung bei verschiedenen Zündwinkeln zeigt, |
| Figur 6 | eine digitale Simulation des sich ändernden Leistungsflusses in der Hochspannungsleitung bei Veränderung des Zündwinkels der Schaltungseinrichtung der Vorrichtung gemäß Figur 2 zeigt, |
| Figur 7 | die Anteile der Grundschwingung und der höheren harmonischen Schwingungen der Spannung, die an der Vorrichtung gemäß Figur 2 bei konstantem Wechselstrom abfällt, in Abhängigkeit des Zündwinkels zeigt, |
| Figur 8 | eine die Steuerungseinheit der Vorrichtung gemäß Figur 2 verdeutlichende Darstellung zeigt, |
| Figur 9 | eine genauere Darstellung der Steuerungseinheit gemäß Figur 8 zeigt, |
| Figuren 10 und Figur 11 | Kennlinien der Steuerungseinheit gemäß Figur 9 zeigen, |
| Figur 12 | ein weiteres Ausführungsbeispiel der erfindungsgemäßen Vorrichtung zeigt, |
| Figur 13 | die Steuerungsmittel einer Vorrichtung gemäß Figur 12 verdeutlicht, |
| Figur 14 | berechnete Spannungsverläufe der Grund- und der harmonischen Spannungskomponenten in Abhängigkeit des Zündwinkels einer Vorrichtung gemäß Figur 13 zeigt, |
| Figur 15 | Kennlinien der Steuerungseinheit gemäß Figur 13 verdeutlicht, |
| Figuren 16 und 17 | von Figur 15 abweichende Kennlinien einer Steuerungseinheit für eine Vorrichtung gemäß Figur 13 zeigen, |
| Figur 18 | ein weiteres Ausführungsbeispiel der erfindungsgemäßen Vorrichtung zeigt, |
| Figur 19 | ein weiteres Ausführungsbeispiel der erfindungsgemäßen Vorrichtung zeigt, |
| Figur 20 | ein die Steuerung der Vorrichtung gemäß Figur 19 verdeutlichende Darstellung zeigt, |
| Figuren 21 bis 23 | Kennlinien der Steuerungseinheit gemäß Figur 20 verdeutlichen und |

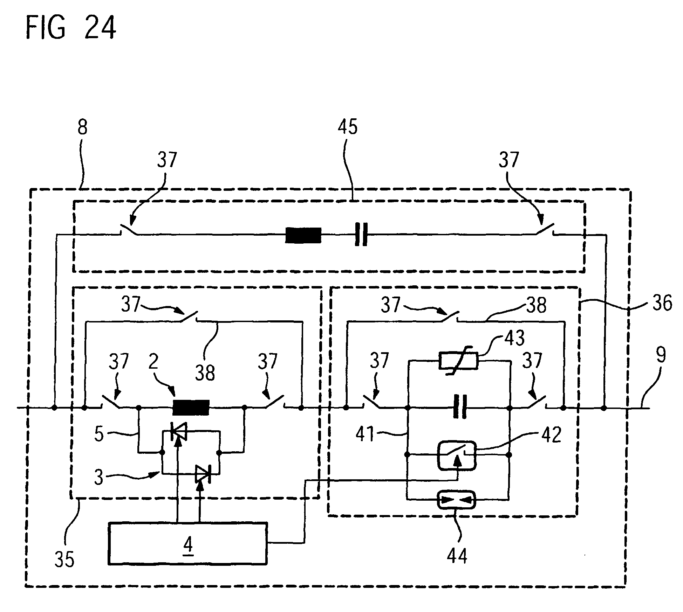

Figur 24          ein weiteres Ausführungsbeispiel der erfindungsgemäßen Vorrichtung zeigt.

Figur 2 zeigt ein Ausführungsbeispiel der erfindungsgemäßen Vorrichtung 8, die über in Figur 2 nicht erkennbare Schalter in eine Hochspannungsleitung 9 einfügbar ist, die zur Übertragung einer Leistung zwischen zwei Knoten eines elektrischen Energieverteilungsnetzes vorgesehen ist. Dabei ist die Vorrichtung 8 in Reihe in der Hochspannungsleitung 9 also so angeordnet, dass der gesamte durch die Hochspannungsleitung 9 geführte Wechselstrom über die Vorrichtung 8 fließt. Die Hochspannungsleitung besteht wie üblich aus drei Phasen also drei nebeneinander geführten Hochspannungsleitern, von denen aus Gründen der Übersichtlichkeit in den Figuren der Zeichnung nur eine Phase verdeutlicht ist. Die anderen, nicht gezeigten Phasen der Hochspannungsleitung 9 sind auf die gleiche Art und Weise wie die in den Figuren der Zeichnung verdeutlichte Phase mit der Vorrichtung 8 verbunden. Entsprechend ist die Einrichtung 8 selbstverständlich mit einer Hochspannungsleitung verbindbar, die mehr als drei Phasen oder weniger als drei Phasen aufweist.

Die Vorrichtung 8 umfasst eine Regelspule 2 sowie eine Schalteinrichtung 3, die hier durch zwei gegensinnig geschaltete Thyristoren 10 realisiert ist. Dabei ist die Schalteinrichtung 3 parallel zur Regelspule 2 in dem Parallelzweig 5 angeordnet.

Die Thyristoren 10 sind über zweckmäßige Steuerleitungen 11 jeweils mit einer Steuerungseinheit 4 verbunden, die zum Erzeugen eines Zündsignals in Abhängigkeit der Phase des Wechselstromes in der Hochspannungsleitung 9 eingerichtet ist.

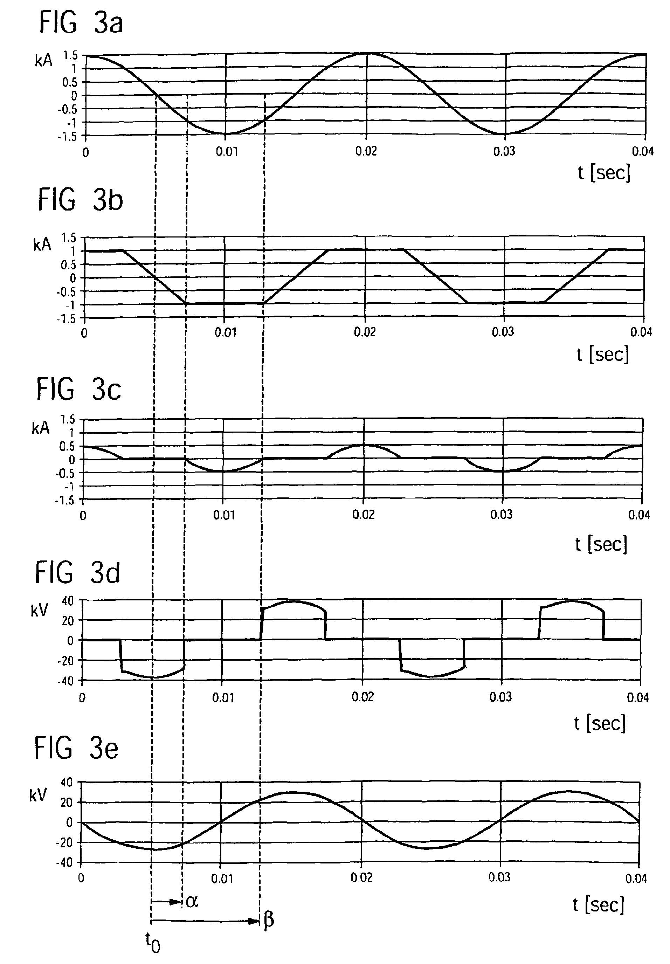

Figur 3 verdeutlicht die Wirkungsweise der erfindungsgemäßen Vorrichtung 8 gemäß Figur 2 anhand zeitaufgelöster schematischer Strom- beziehungsweise Spannungskurven. In Figur 3a sind zwei Schwingungsperioden eines idealisierten sinusförmigen Wechselstromes $I_{Leit}$ in der Hochspannungsleitung 9 gezeigt, wobei die Amplitude des Wechselsstromes 1,5 kA beträgt. Zum Zeitpunkt $t_o$ befinden sich die Thyristoren 10 der Schalteinrichtung 3 in einer Sperrstellung, so dass der in Figur 3b dargestellte über die Regelspule 2 geführte Strom demjenigen des Wechselstromes der Hochspannungsleitung 9 im Wesentlichen entspricht. Der über den Parallelzweig 5 geführte Strom ist in Figur 3c verdeutlicht. Dieser ist im Zeitpunkt $t_o$ folglich gleich Null.

Wird der durch $\alpha$ in Figur 3 verdeutlichte Zeitpunkt erreicht, erfolgt die Zündung der Thyristoren 10 der Schalteinrichtung 3 durch die Steuerungseinheit 4. Durch die Selbstinduktion der Spule bleibt der in Figur 3b gezeigte Spulenstrom im Wesentlichen konstant. Der in Figur 3c gezeigte über den Parallelzweig 5 geführte Strom erreicht im Scheitelpunkt des Wechselstromes ebenfalls ein relatives Minimum. In dem mit $\beta$ verdeutlichten Zeitpunkt wird der über den Parallelzweig und somit über die Schalteinrichtung 3 mit den Thyristoren 10 geführte Strom gleich Null, wodurch die Thyristoren 10 erneut in die Sperrstellung überführt werden. Ab diesem Zeitpunkt entspricht der über die Regelspule 2 geführte Strom wieder dem Wechselstrom der Hochspannungsleitung 9. Dieser Vorgang wiederholt sich anschließend - diesmal jedoch im positiven Bereich des Wechselstromes, also bei umgekehrten Vorzeichen des Wechselstromes.

In Figur 3d ist die an der Schalteinrichtung 3 abfallende Spannung verdeutlicht. Deren Betrag ist im Zeitpunkt $t_o$ maximal und entspricht dem Betrag von etwa -40 kV. Im Zeitpunkt $\alpha$ kommt es zur Zündung der Thyristoren 10, woraufhin die Spannung auf einen Nullwert abfällt, um im Zeitpunkt $\beta$ auf +28 kV anzusteigen.

Figur 3e zeigt das Ergebnis der Berechnung der Grundschwingungskomponente der an der Vorrichtung 8 insgesamt abfallenden Spannung. Es wird erkennbar, dass der Grundschwingungsanteil der Spannung gegenüber dem in Figur 3a gezeigten Strom um +90 Grad phasenverschoben ist. Wie nachfolgend ausgeführt werden wird, ist die Amplitude des Grundschwingungsanteils vom Zündwinkel $\alpha$ abhängig. Aus diesem Grunde wirkt die Vorrichtung 8 wie eine regelbare Reaktanz.

Im Zeitraum zwischen dem ersten Zünden der Thyristoren $\alpha$ und der nachfolgenden Unterbrechung des Stromes durch die Thyristoren $\pi - \alpha$, also $\beta$ ist die an der Zündvorrichtung 8 abfallende Spannung, wie in Figur 3d erkennbar, gleich Null. Im Sperrzustand der Thyristoren 10, hängt die abfallende Spannung V(t) von der Änderung des Stromes sowie der Induktivität der Regelspule ab. Es gilt

$$V(t) = 0 \qquad \text{für } \alpha < \omega t < (\pi - \alpha)$$

$$V(t) = L_{RSP}\, \frac{d(I_{Leit})}{dt} \qquad \text{für } (\pi - \alpha) < \omega t < (\pi + \alpha),$$

wobei $I_{Leit}$ dem Wechselstrom in der Hochspannungsleitung 9 und $L_{RSP}$ der Induktivität der Regelspule entspricht. $\alpha$ steht für den Zündwinkel im Bogenmaß und $\omega$ - ebenfalls im Bogenmaß - für die Winkelgeschwindigkeit. Mit $I_{Leit} = I_0 \sin(\omega t)$ ergibt sich

$$V(t) = L_{RSP} \, \omega \, I_0 \, \cos(\omega t) \quad \text{für} \quad (\pi - \alpha) < \omega t < (\pi + \alpha)$$

Die Grundschwingungskomponente von V(t) kann unter Anwendung von Fourier-Techniken berechnet werden. Hierbei wird näherungsweise davon ausgegangen, dass die Resistenz der Vorrichtung gleich Null ist. Daher ist nur der Schwingungsanteil, der an der Vorrichtung 8 abfallenden Spannung von Interesse, der gleichphasig mit $\cos(\omega t)$ ist. Wie in Figur 3 gezeigt, sind die positiven und negativen Halbzyklen der an der Vorrichtung abfallenden Spannung symmetrisch. Daher ist die Größe des Anteils der Grundschwingung der an der Vorrichtung 8 abfallenden Spannung $V_{SUM}$ gegeben durch

$$V_{SUM} = \frac{2}{\pi} \cdot \int_{\pi-\alpha}^{\pi+\alpha} V(t) \cdot \cos(\omega \cdot t) \cdot d(\omega \cdot t)$$

$$= \frac{2}{\pi} \cdot I_0 \cdot \omega \cdot L_{RSP} \cdot \int_{\pi-\alpha}^{\pi+\alpha} \cos^2(\omega \cdot t) \cdot d(\omega \cdot t)$$

$$= \frac{2}{\pi} \cdot I_0 \cdot \omega \cdot L_{RSP} \cdot \left( \alpha + \frac{\sin(2 \cdot \alpha)}{2} \right)$$

für $\alpha$ zwischen 0 und 90 Grad.

Somit ergibt sich die Reaktanz bei der Grundschwingung gemäß

$$\frac{X_{SUM}}{X_{RSP}} = \frac{2}{\pi} \cdot \left( \alpha + \frac{\sin(2 \cdot \alpha)}{2} \right)$$

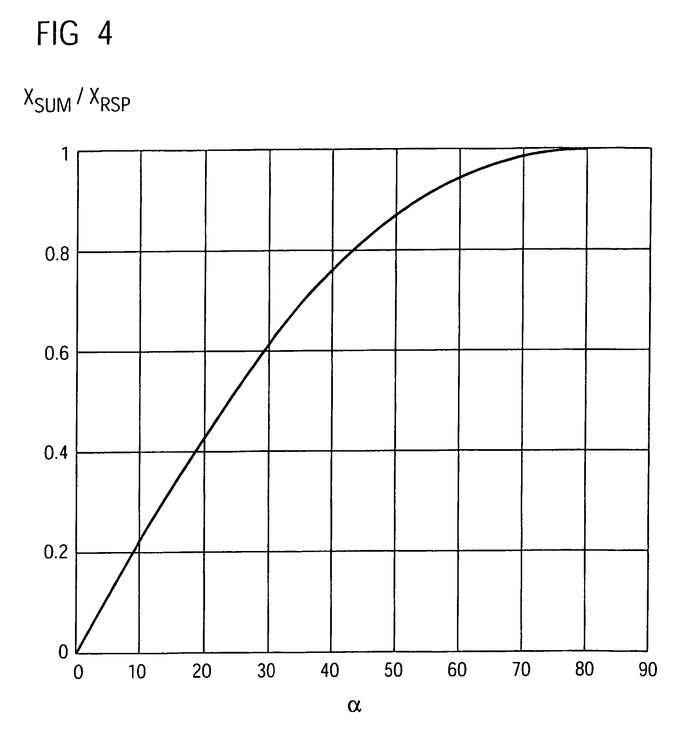

Figur 4 zeigt die auf die Reaktanz der Regelspule 2 $X_{RSP}$ normierte Reaktanz der Vorrichtung 8 $X_{SUM}$ in Abhängigkeit verschiedener Zündwinkel $\alpha$, die in Figur 4 in der Einheit des Bogenmaßes angegeben ist. Es ist erkennbar, dass die Impedanz der erfindungsgemäßen Vorrichtung 8 bei Zündwinkeln im Bereich von 0 Grad zu vernachlässigen ist, während diese bei Zündwinkeln größer als 70 Grad sich asymptotisch dem Höchstwert nähert, der von der Reaktanz der Regelspule $X_{RSP}$ bestimmt ist.

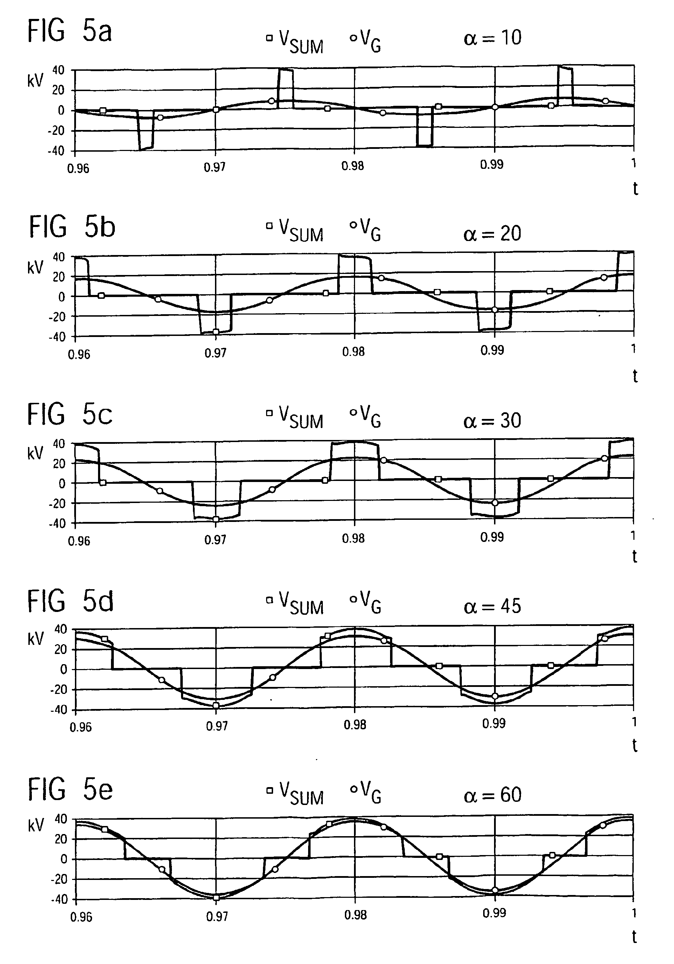

Figur 5 zeigt die an der Vorrichtung 8 abfallende Gesamtspannung $V_{SUM}$, wobei der Funktionsverlauf durch viereckige Punkte gekennzeichnet ist. Weiterhin ist in Figur 5 der anhand eines vereinfachten Modells berechnete Grundschwingungsanteil der Spannung in einer Kurve $V_G$ verdeutlicht, die mit runden Punkten gekennzeichnet ist. Bei der Berechnung wurde von einem idealen sinusförmigen Wechselstrom mit einer Amplitude von 1,5 kA ausgegangen, wobei die Regelspule 2 eine Induktivität von 80 Milli-Henry aufwies. In Figur 5a sind die Spannungsverläufe bei einem Zündwinkel $\alpha$ von 10° dargestellt. Dies bedeutet, dass bereits nach einer kurzen Zeitdauer im Anschluss an einen Nulldurchgang des Wechselstromes in der Hochspannungsleitung 9 ein Steuerpuls für die Thyristoren 10 der Schalteinrichtung 3 ausgelöst wird, wodurch die Regelspule 2 überbrückt und die Spannung abgebaut wird.

Die Zündwinkel $\alpha$ der Figuren 5b, 5c, 5d und 5e betrugen 20, 30, 45 beziehungsweise 60°. Es ist erkennbar, dass die Amplitude der Grundschwingung mit größer werdendem Zündwinkel ansteigt und in Figur 5e der Verlauf der Grundschwingung dem Spannungsabfall der Vorrichtung 8 im Wesentlichen entspricht.

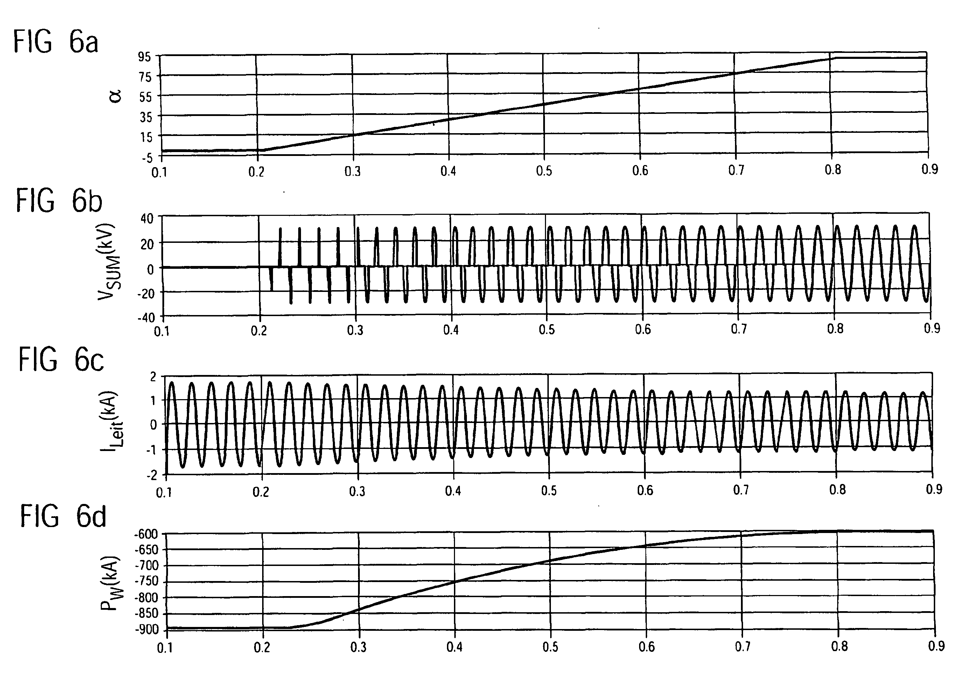

Figur 6 zeigt eine digitale Simulation auf der Grundlage desselben vereinfachten Modells, das auch der Figur 5 zu Grunde lag. Die gezeigten Ergebnisse basieren auf der Annahme einer Reaktanz einer Hochspannungsleitung von 45 Ohm bei 50 Hz, wobei die Vorrichtung 8 mit einer Regelspule 2 von 80 Milli-Henry bestückt ist. In Figur 6a ist der jeweils für die Rechnung gewählte Zündwinkel $\alpha$ im Bogenmaß in Abhängigkeit der Zeit in Sekunden aufgetragen, wobei $\alpha$ nach 0,2 sec noch 0 beträgt, und nach 0,8 sec auf 90 Grad angestiegen ist. Figur 6b zeigt wieder die an der Vorrichtung abfallende Spannung $V_{SUMm}$ in Abhängigkeit der Zeit, deren Verlauf sich mit ansteigendem Zündwinkel mehr und mehr einem sinusförmigen Verlauf annähert. In Figur 6c ist der Wechselstrom der Hochspannungsleitung aufgetragen, dessen Amplitude mit anwachsendem Zündwinkel abnimmt. Figur 6d verdeutlicht die Wirkleistung $P_W$, die durch die Hochspannungsleitung transportiert wird und deren Betrag erwartungsgemäß mit größer werdenden Zündwinkeln $\alpha$ abnimmt.

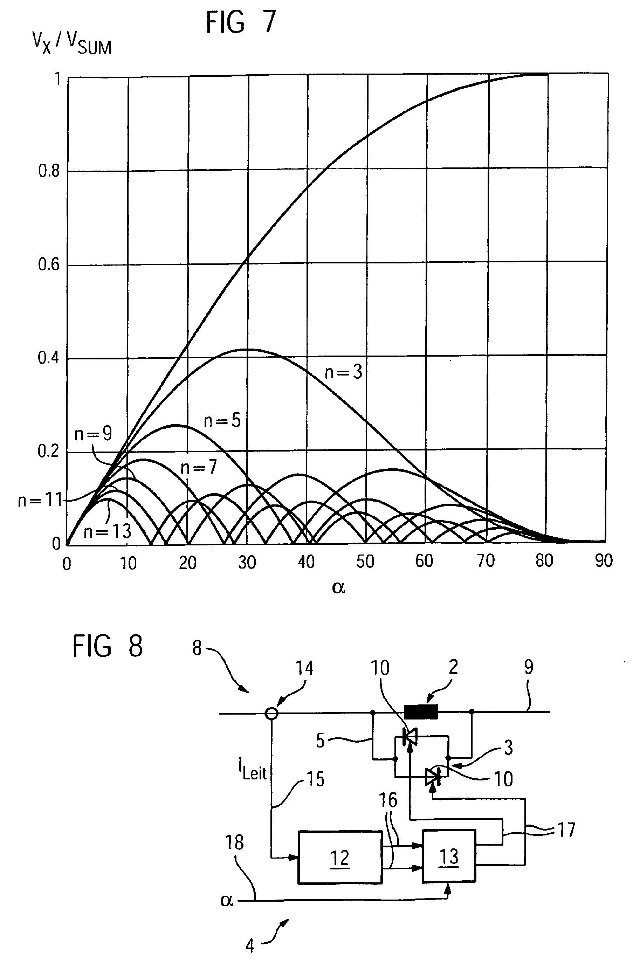

In Figur 7 sind die Amplituden der Grundschwingung sowie der höheren harmonischen Schwingungsanteile der an der Vorrichtung 8 abfallenden Spannung bis zur 13. Harmonischen $V_x$ bezogen auf die Amplitude der Gesamtspannung $V_{SUM}$, in Abhängigkeit des Zündwinkels $\alpha$ gezeigt. Es ist erkennbar, dass die Amplitude Y der höheren Schwingungen bei größer werdenden Zündwinkeln kleiner wird und der Grundschwingungsanteil an der Gesamtspannung bei Zündwinkeln von 90 Grad nahezu 100 % beträgt.

Figur 8 zeigt die Vorrichtung 8 gemäß Figur 2, wobei jedoch die Steuerungseinheit 4 detaillierter dargestellt ist. Wie in Figur 8 erkennbar umfasst die Steuerungseinheit 4 einen Nulldurchgangsgeber 12 sowie eine Auslöseeinheit 13, wobei der Nulldurchgangsgeber 12 mit einem Stromgeber 14 verbunden ist. Der Stromgeber 14 seinerseits besteht beispielsweise aus einem nicht gezeigten Stromwandler, der einen dem Wechselstrom in der Hochspannungsleitung 9 proportionalen Sekundärstrom erzeugt, welcher von einer ebenfalls nicht gezeigten Abtasteinheit des Stromgebers 14 unter Gewinnung von Abtastwerten abgetastet und die Abtastwerte anschließend von einem nicht gezeigten Analog-Digital-Wandler in digitale Stromwerte $I_{Leit}$ umgewandelt und dem Nulldurchgangsgeber 12 über eine Verbindungsleitung 15 zugeführt werden. Stellt der Nulldurchgangsgeber 12 einen Vorzeichenwechsel der digitalen Stromwerte $I_{Leit}$ fest, sendet dieser Nulldurchgangspulse 16 an die Auslöseeinheit 13. Nach Erhalt der Nulldurchgangspulse 16 sendet die Auslöseeinheit 13 nach einer Verzögerungszeit $\alpha$ Auslösepulse 17 an die Thyristoren 10 der Schalteinrichtung 3, die daraufhin von einer Sperrstellung, in der ein über den Parallelzweig 10 geführter Strom unterbrochen ist, in eine Durchlassstellung überführt werden, in der ein Stromfluss über den Parallelzweig 5 ermöglicht ist. Die Verzögerungszeit, mit der die Auslöseeinheit 13 die Abgabe der Auslösepulse 17 nach Erhalt der Nulldurchgangspulse 16 verzögert, entspricht dem Zündwinkel $\alpha$, welcher der Auslöseeinheit 13 über eine Signalleitung 18 zugeführt wird. Durch Veränderung des Zündwinkelparameters $\alpha$ über die Signalleitung 18 ist somit eine Steuerung der Impedanz und daher die über die Hochspannungsleitung 9 übertragene Wirkleistung regelbar.

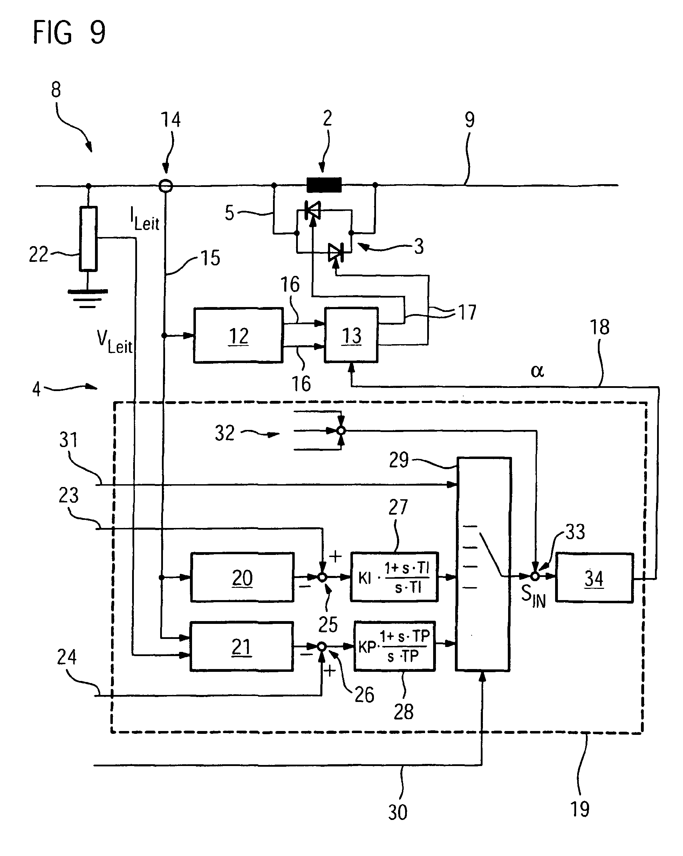

Figur 9 zeigt eine genauere Darstellung der Steuerungseinheit 4 der Vorrichtung 8 gemäß Figur 8 und insbesondere die Komponenten eines Zündwinkelgebers 19 zur Erzeugung eines zur Steuerung der Vorrichtung 8 geeigneten Zündwinkels $\alpha$. Der Zündwinkelgeber 19 weist einen Echtstromgeber 20 sowie einen Echtleistungsgeber 21 auf. Dabei ist der Echtstromgeber 20 mit dem Stromgeber 14 verbunden und zum Empfang der digitalen Stromwerte 19, die von dem Stromgeber wie zuvor beschrieben erzeugt werden, eingerichtet.

Der Echtleistungsgeber 21 ist sowohl mit dem Stromgeber 14 als auch mit einem Spannungsteiler 22 verbunden, dessen Ausgangssignal $V_{Leit}$ proportional zu der Spannung in der Hochspannungsleistung 9 gegenüber Erdpotential ist. Die vom Spannungsteiler 22 abgegebenen analogen Signale werden vom Echtleistungsgeber 21 abgetastet und digitalisiert und mit den digitalen Stromwerten des Spannungsstandards 14 zu digitalen Leistungswerten, die einer durch die Hochspannungsleitung 9 übertragenen Leistungen entsprechen, umgerechnet.

Der Zündwinkelgeber 19 ist weiterhin über eine Sollstromleitung 23 sowie über eine Sollleistungsleitung 24 mit Stellparametern versorgbar, wobei die Stellparameter jeweils einer Abgleicheinheit 25 und 26 zugeführt werden. Die Sollstromleitung 23 oder die Sollleistungsleitungen 24 sind beispielsweise mit einem nicht gezeigten Rechner oder einer nicht gezeigten Leitstelle verbunden, womit ein Anwender in die Lage versetzt wird, der Steuerungseinheit 4 zweckmäßige Stellparameter zuzuführen. Die Abgleicheinheiten 25 und 26 sind jeweils mit einem Proportional-Integral-Regler 27 und 28 verbunden, denen eine Auswahleinheit 29 nachgeschaltet ist. Die Auswahleinheit 29 dient zur Auswahl der Messgröße, die durch Vergleich mit einem Stellparameter überwacht und zur Regelung der Vorrichtung 8 verwendet werden soll. Zur Auswahl des jeweiligen Stellparameters ist die Auswahleinheit 29 über eine Auswahlleitung 30 beispielsweise mit dem Rechner oder der Leitstelle verbunden.

Die Auswahleinheit 29 ist ferner mit einer Sollzündwinkelleitung 31 verbunden. Durch zweckmäßige Einstellung der Auswahleinheit 29 über die Auswahlleitung 30 ist es daher möglich, den Zündwinkelgeber direkt mit einem Sollzündwinkel zu versorgen, der dann zur Steuerung der Vorrichtung 8 einsetzbar ist.

Ferner sind über weitere Steuerungsleitungen 32 zusätzliche Steuerungssignale in den Zündwinkelgeber 19 von außen beispielsweise über den Steuerungsrechner einsetzbar. Die zusätzlichen Steuerungssignale 32 können zusätzlich zu den oben beschriebenen Steuerungs- und Regelungsmaßnahmen zugeführt und zur Steuerung verwendet werden. Zur Regelung dient beispielsweise eine der Auswahleinheit 29 nachgeschaltete Abgleicheinheit 33. Weitere Steuerungssignale in diesem Sinne sind beispielsweise bekannte Steuerungsgrößen zur Steigerung der transienten Stabilität des Energieversorgungsnetzwerkes. Darüber hinaus ist der Einsatz der Vorrichtung 8 zum Dämpfen subsynchroner Resonanzen vorstellbar.

An dieser Stelle sei darauf hingewiesen, dass in dem Figuren 8 und 9 die Steuerung lediglich schematisch gezeigt und üblicherweise vom Fachmann eingesetzte Begrenzer, Signalfilter und dergleichen zwar nicht ausdrücklich erwähnt jedoch im Rahmen der Erfindung einsetzbar sind.

Das Ausgangssignal $S_{IN}$ der Abgleicheinheit 33 wird einer Linearisierungseinheit 34 zugeführt, die zur Kompensation eines nicht linearen Verhaltens der Impedanz der Vorrichtung 8 bezüglich des besagten Ausgangssignals $S_{IN}$ vorgesehen ist.

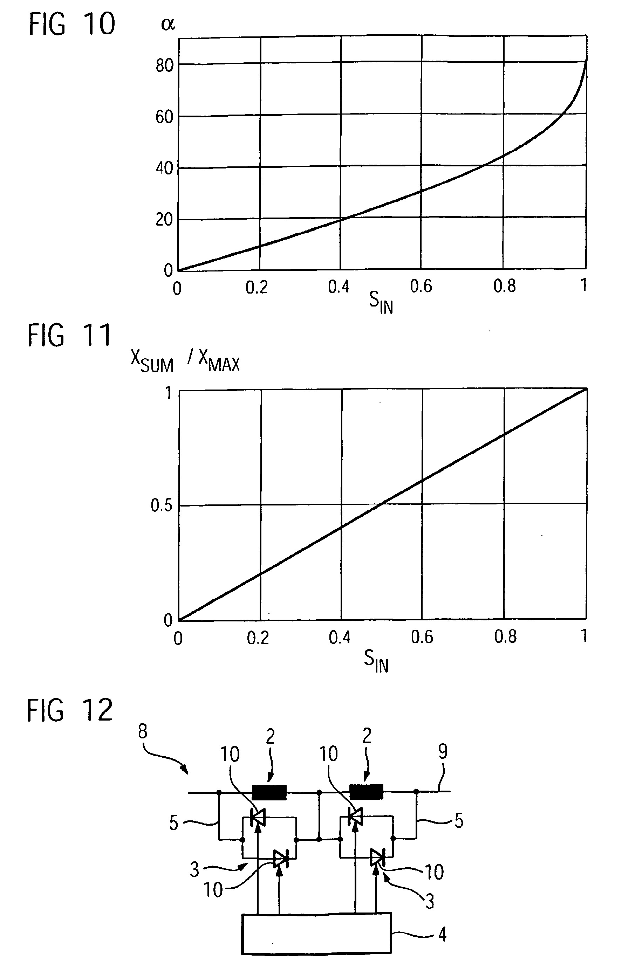

Die Figuren 10 und 11 verdeutlichen die Wirkungsweise der Linearisierungseinheit 34. In Figur 10 ist auf der Ordinate das Ausgangssignal $\alpha$ der Linearisierungseinheit 34 in Abhängigkeit des Ausgangssignals der Auswahleinheit 29 bzw. der Abgleicheinheit 33 also des Eingangssignals $S_{IN}$ der Linearisierungseinheit 34 aufgetragen. Es ist erkennbar, dass zwischen diesen Signalen ein nicht linearer Zusammenhang besteht. In Figur 11 ist auf der Ordinate zwischen 0 und 1 die auf den Maximalwert $X_{MAX}$ normierte Reaktanz der Vorrichtung 8 $X_{SUM}$ in Abhängigkeit des Eingangssignals $S_{IN}$ der Linearisierungseinheit 34 also des Ausgangssignals der Auswahleinheit 29 dargestellt. Es wird erkennbar, dass durch die Linearisierungseinheit 34 die gewünschte Proportionalität zwischen diesen beiden Größen hergestellt wird.

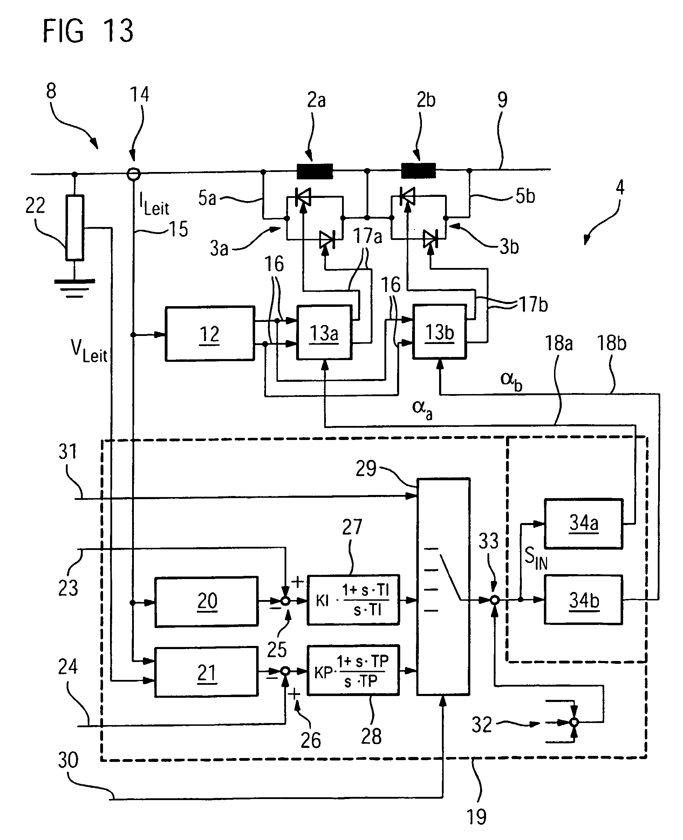

Figur 12 zeigt ein weiteres Ausführungsbeispiel einer erfindungsgemäßen Vorrichtung, die zwei in Reihenschaltung angeordnete Regelspulen 2 aufweist, welche jeweils durch einen separaten Parallelzweig 5, überbrückbar sind. Dabei ist jeder Parallelzweig mit einer Schalteinrichtung 3 versehen, deren gegensinnig geschaltete Thyristoren 10 von einer gemeinsamen Steuereinheit 4 gesteuert sind. Die gemeinsame Steuerung zweier Schalteinrichtungen 3 ist in Figur 13 verdeutlicht. Es ist erkennbar, dass die Steuerungseinheit 4 nunmehr zwei Auslöseeinheiten 13a und 13b aufweist, die jeweils einer Schalteinrichtung 3a beziehungsweise 3b zugeordnet sind. Dabei werden Auslöseeinheiten 13a und 13b mit unterschiedlichen Zündwinkeln $\alpha_a$ und $\alpha_b$ versorgt. Hierzu wird das Ausgangssignal der Auswahleinheit 29 beziehungsweise der Abgleicheinheit 33 in zwei Signale aufgespalten und jeweils einer Linearisierungseinheit 34a, die mit der Auslöseeinheit 13a verbunden ist, sowie einer Linearisierungseinheit 34b zugeführt, die zum Ansprechen der Auslöseeinheit 13b vorgesehen ist.

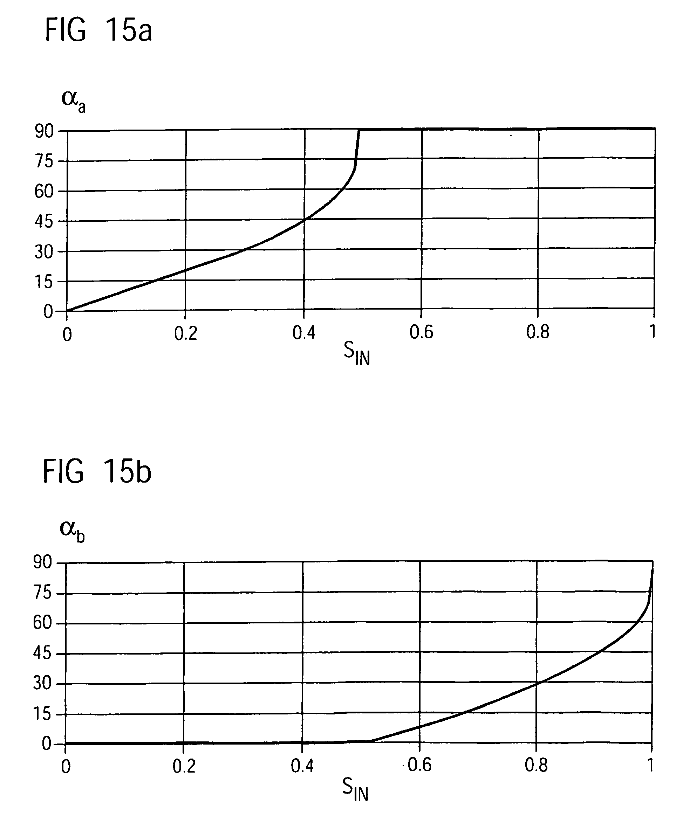

Figur 15a zeigt die Kennlinie der Linearisierungseinheit 34a, wobei in Figur 15b die Kennlinie der Linearisierungseinheit 34b aufgetragen ist. Hierbei ist der von der jeweiligen Linearisierungseinheit 34a bzw. 34b abgegebene Zündwinkel $\alpha_a$ und $\alpha_b$ in Abhängigkeit des Ausgangssignals $S_{IN}$ der Abgleicheinheit 33 aufgetragen.

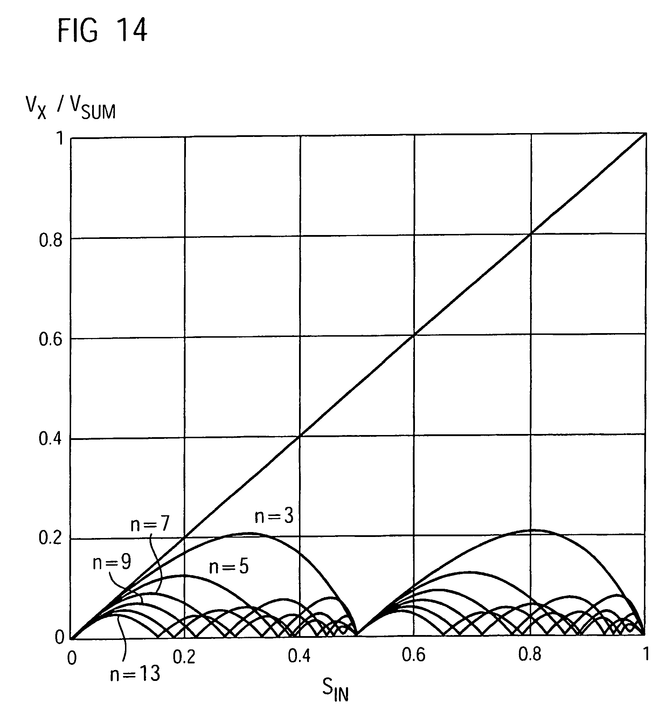

Figur 14 zeigt eine Figur 7 entsprechende Darstellung der berechneten Amplituden der Grundschwingung sowie der höheren harmonischen Schwingungen der an der Vorrichtung 8 abfallenden Spannung $V_x$ normiert auf die an der Vorrichtung 8 insgesamt abfallende Gesamtspannung $V_{SUM}$ in Abhängigkeit des Ausgangssignals $S_{IN}$ der Abgleicheinheit 33 einer Steuerungseinheit 4 gemäß Figur 9. Es ist erkennbar, dass ein besonders vorteilhafter linearer Zusammenhang zwischen dem Ausgangssignal $S_{IN}$ der Abgleicheinheit 33 und der Amplitude der Grundschwingung besteht.

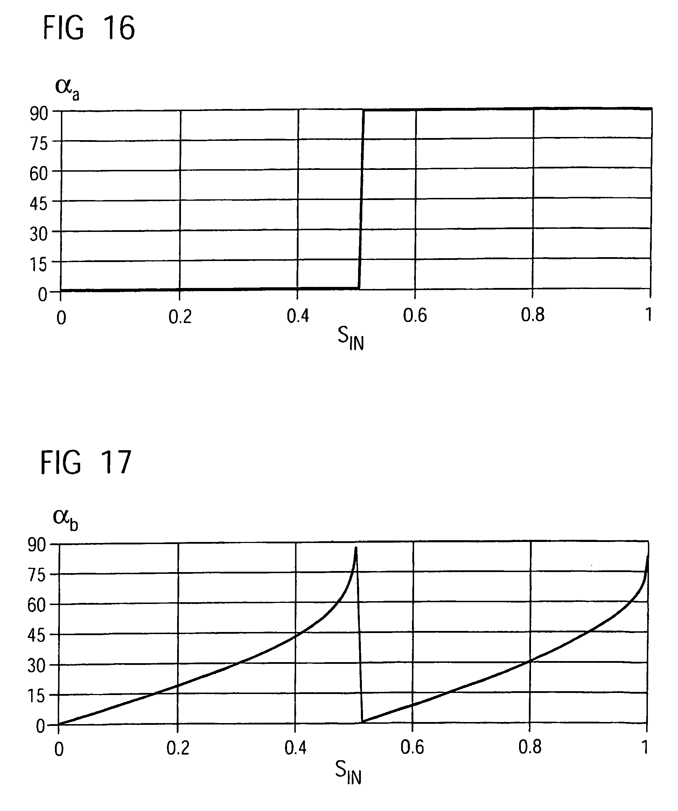

In den Figuren 16 und 17 ist eine hiervon abweichende Konfiguration der Linearisierungseinheiten 34a und 34b gemäß Figur 13 gezeigt. Hierbei ist erkennbar, dass die erste Schalteinrichtung 3a, deren Schaltverhalten durch die Linearisierungseinheit 34a gesteuert ist, wie ein schneller Schalter betrieben ist. Bei normierten Ausgangssignalen $S_{IN}$ der Abgleicheinheit 33 unterhalb von 0,5 verbleibt die Schalteinrichtung 3a in einer Durchlassstellung, in der die gegensinnig geschalteten Thyristoren 10 der Schalteinrichtung 3 den Stromfluss durch den Parallelzweig 10a ermöglichen. Bei Ausgangssignalen $S_{IN}$ der Abgleicheinheit 33 größer als 0,5 wird die Schalteinrichtung 3a in eine Sperrstellung überführt, so dass ein Stromfluss über den Parallelzweig 5a unterbrochen ist. Durch diese Steuerung ist ein Figur 14 im Wesentlichen entsprechender Verlauf der Spannungsamplituden der Grundschwingungsanteile erzielbar.

Gemäß einem abweichenden nicht gezeigten Ausführungsbeispiel wird die in Figur 12 mit 3a bezeichnete Schalteinrichtung nicht durch zwei gegensinnig geschaltete Thyristoren, sondern durch einen mechanischen Schalter realisiert, der mit der Linearisierungseinheit 34a zusammenwirkt, deren Charakteristik der in Figur 16 gezeigten Charakteristik entspricht. Die Verwendung eines mechanischen Schalters statt der Thyristoren 10 bringt Kostenvorteile mit sich.

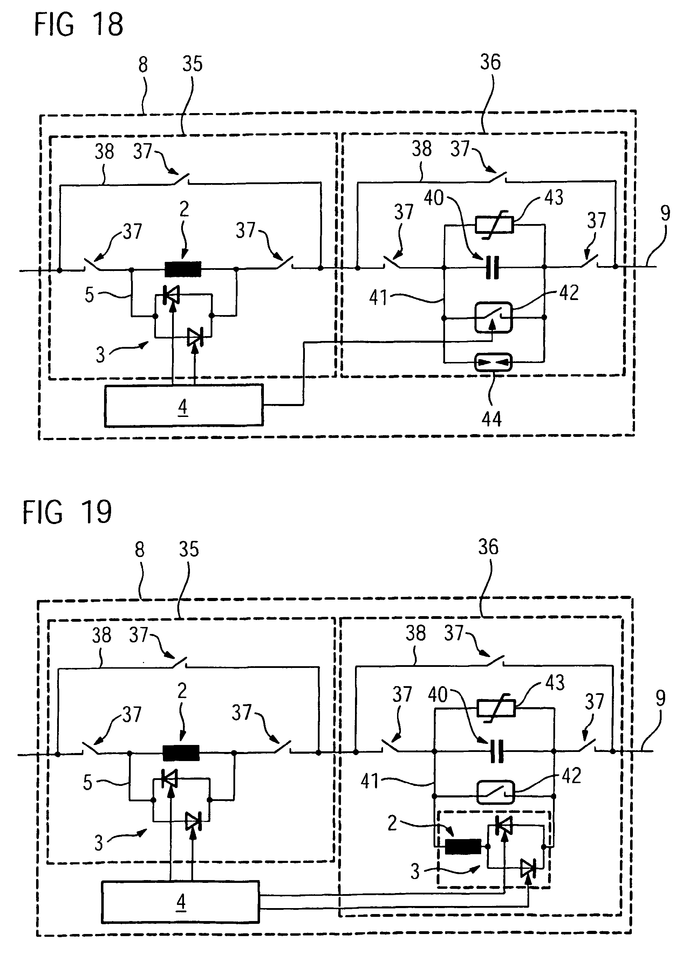

Ein weiteres Ausführungsbeispiel der erfindungsgemäßen Vorrichtung 8 ist in Figur 18 gezeigt. Es ist erkennbar, dass die mit einer gestrichelten Linie umgebene erfindungsgemäße Vorrichtung 8 aus einer mit einer weiteren gestrichelten Linie umgebenen induktiven Einheit 35 sowie aus einer mit einer gestrichelten Linie umgebenen kapazitiven Einheit 36 besteht, die durch mechanische Schalter 37 in Reihe zueinander schaltbar sind. Die induktive Einheit 35 entspricht weitestgehend dem in Figur 2 gezeigten Ausführungsbeispiel der erfindungsgemäßen Vorrichtung, wobei jedoch ein Überbrückungszweig 38 zum Überbrücken der induktiven Einheit 35 vorgesehen ist. Die kapazitive Einheit 36 ist ebenfalls mittels eines Überbrückungszweiges 38 überbrückbar.

Die kapazitive Einheit 36 besteht weiterhin aus einem Kondensator 40 sowie einem Parallelzweig 41, in dem ein mechanischer Schalter 42 angeordnet ist. In Parallelschaltung zum Kondensator 40 sowie zum Schalter 42 ist ferner ein Varistor 43 sowie eine Funkentladungsstrecke 44 vorgesehen. Die kapazitive Einheit 36 entspricht somit einer als solchen vorbekannten Lösungen zur Kompensation der Impedanz einer Hochspannungsleitung 9 mit der Ausnahme, dass der Schalter 42 zur Überbrückung des Kondensators 40 durch dieselbe Steuerungseinheit 4 geöffnet bzw. geschlossen wird, die auch zur Steuerung der Schalteinrichtung 3 der induktiven Einheit 35 dient. Durch diese Reihenschaltungen von induktiver Einheit 35 und kapazitiver Einheit 36 ist die Regelungsbreite der Vorrichtung 8 erhöht.

Figur 19 zeigt ein dem Ausführungsbeispiel gemäß Figur 18 weitgehend entsprechendes Ausführungsbeispiel der erfindungsgemäßen Vorrichtung 8. In dem in Figur 19 gezeigten Ausführungsbeispiel spricht die Steuereinheit 4 in der induktiven Einheit 36 jedoch eine Schalteinrichtung 3 an, die in Reihe zu einer Regelspule 2 angeordnet ist. Dabei ist die Schalteinrichtung 3 wieder durch zwei gegensinnig geschaltete Thyristoren 10 realisiert. Durch das Zünden der Thyristoren 10 wird die Reaktanz der Regelspule 2 der Vorrichtung zugeschaltet.

Auch die in Figur 19 gezeigte kapazitive Einheit 36 entspricht einer als solchen vorbekannten Vorrichtungen, die jedoch hier durch die gezeigte Kombination zur Erweiterung des Anwendungsbereichs der erfindungsgemäßen Vorrichtung 8 und gleichzeitig zur Steuerung der Impedanz der Hochspannungsleitung 9 dient.

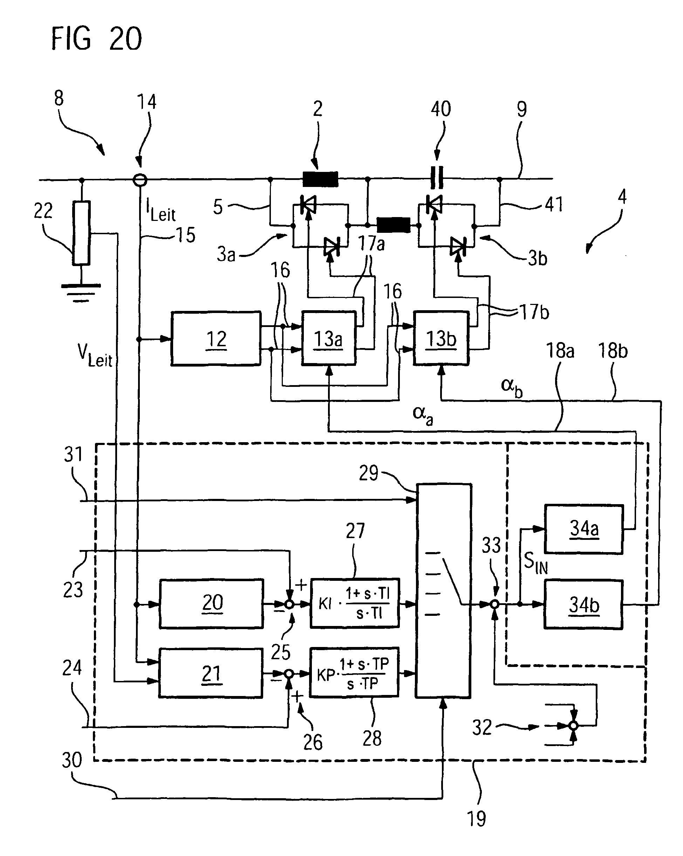

Figur 20 zeigt schematisch die Steuerungseinheit 4 der Vorrichtung 8 gemäß Figur 19. Es ist erkennbar, dass auch hier zwei Auslöseeinheiten 13a und 13b vorgesehen sind, die jeweils mit einer Schalteinrichtung 3a und 3b verbunden sind. Die Auslöseeinheiten 13a und 13b stehen wiederum jeweils in Verbindung mit einer zugeordneten Linearisierungseinheit 34a und 34b, die jeweils mit einer unterschiedlichen jedoch zweckmäßigen Charakteristik belegt sind.

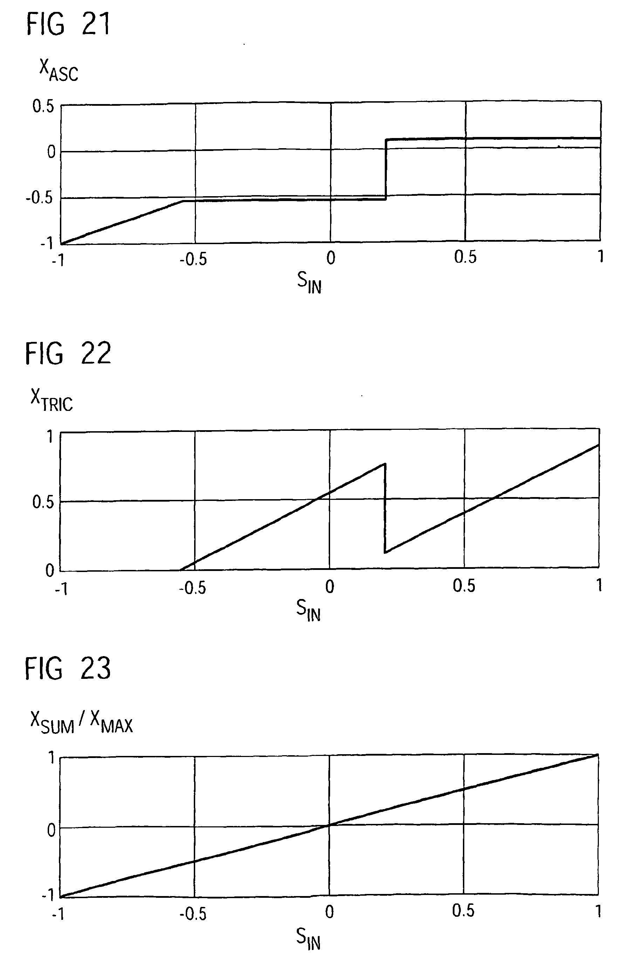

Ein Beispiel dieser Belegung ist in den Figuren 21, 22 und 23 zum Erhalt einer kontinuierlichen und bezüglich $S_{IN}$ linearen Funktionsweise der Vorrichtung 8 gezeigt. Hierbei wurde von einer symmetrischen Reaktanz der Vorrichtung 8 ausgegangen, wobei auf der Abszisse abgetragene positive Werte für induktive, negative Abszissen-Werte hingegen für kapazitive Reaktanzen stehen. Figur 21 zeigt die Reaktanz der kapazitiven Einheit 36 $X_{ASC}$ in Abhängigkeit des Ausgangssignals $S_{IN}$ der Abgleicheinheit 33. Figur 22 zeigt die Reaktanz der induktiven Einheit 35 $X_{TRIC}$ in Abhängigkeit des Ausgangssignals $S_{IN}$ der Abgleicheinheit 33. Die sich ergebende Reaktanz $X_{SUM}$ der Vorrichtung 8, die sich aus Gesamtreaktanz der in Reihe geschalteten induktiven Einheit 35 und kapazitiven Einheit 36 zusammensetzt, ist in Figur 23 in Abhängigkeit des Ausgangssignals $S_{IN}$ der Abgleicheinheit 33 dargestellt. Es ist ein linearer Zusammenhang erkennbar.

Figur 24 zeigt ein weiteres Ausführungsbeispiel einer erfindungsgemäßen Vorrichtung 8 mit einer induktiven Einheit 35 sowie kapazitiven Einheit 36, die in Reihe schaltbar sind, wobei dieser Reihenschaltung eine Filtereinheit 45 parallel geschaltet ist. Die Filtereinheit 45 stellt einen sogenannten einfach abgestimmten Filter dar, der beispielsweise zur Zündung einer bestimmten harmonischen Schwingungskomponente der an der Vorrichtung 8 abfallenden Spannung eingerichtet ist.

Es sei abschließend noch einmal darauf hingewiesen, dass eine Filtereinheit 45 in Parallelschaltung erfindungsgemäß zur Vorrichtung 8 nur dann möglich ist, wenn neben einer induktiven Einheit 35 auch eine kapazitive Einheit 36 vorgesehen ist. Bei einem hiervon abweichenden Ausführungsbeispiel ist eine nicht regelbare induktive Einheit, also eine Spule, anstelle der kapazitiven Einheit 36 in Reihenschaltung zur Regelspule 2 zu diesem Zweck, also zum Anschluss der Filtereinheit 45, vorgesehen.

## Patentansprüche

1. Vorrichtung (8) zum Einstellen der Impedanz einer Wechselstrom führenden aus mehreren Phasen bestehenden Hochspannungsleitung (9) mit wenigstens einer in Reihenschaltung in die Hochspannungsleitung (9) einfügbaren Regelspule (2) und mit wenigstens einer jeweils einer Regelspule (2) zugeordneten Schalteinrichtung (3), wobei eine Steuerungseinheit (4) zum Steuern jeder Schalteinrichtung (3) auf einer Weise vorgesehen ist, dass durch das Schalten der Schalteinrichtung (3) die in der Vorrichtung (8) wirkende Reaktanz der Regelspule (2) einstellbar ist, **dadurch gekennzeichnet, dass** jede Schalteinrichtung (3) parallel zu der ihr zugeordneten Regelspule (2) in einem Parallelzweig (5) angeordnet ist, wobei die Steuerungseinheit (4) eine mit Stromgebern (14) verbundene Nulldurchgangseinheit (12) zum Nachweis eines Nulldurchgangs des Wechselstroms und wenigstens eine mit einem Zündwinkelgeber (19) verbundene Auslöseeinheit (13,13a,13b) aufweist und wobei der Zündwinkelgeber (19) mit einem Stromgeber (14) zum Messen des Wechselstroms und mit einem Spannungsgeber (22) zum Messen der Spannung der Hochspannungsleitung (9) gegenüber dem Erdpotential oder der Spannungen zwischen den Phasen verbunden ist, wobei die Steuerungseinheit (4) über ein Festspeicherelement verfügt, das zur Aufnahme von Stellparametern vorgesehen ist, wobei wenigstens ei-ne Abgleicheinheit (25,26,33) zum Feststellen von Abweichungen zwischen den Stellparametern und den Messwerten des Strom- (14) und/oder des Spannungsgebers (22) oder zwischen den Stellparametern und aus den Messwerten des Strom- und/oder Spannungsgebers berechneten Messgrößen vorgesehen ist.

2. Vorrichtung (8) nach Anspruch 1, **dadurch gekennzeichnet, dass** wenigstens eine Schalteinrichtung (3) aus gegensinnig geschalteten Thyristoren (10) besteht.

3. Vorrichtung (8) nach einem der vorhergehenden Ansprüche, **dadurch gekennzeichnet, dass** zwei in Reihe angeordnete Regelspulen (2) vorgesehen sind, die jeweils eine in dem zugeordneten Parallelzweig (5) angeordnete Schalteinrichtung (3) in einer Parallelschaltung zu sich aufweisen.

**4.** Vorrichtung (8) nach Anspruch 3,
**dadurch gekennzeichnet, dass**
die Steuerungseinheit (4) zwei Auslöseeinheiten (13a,13b) aufweist, die jeweils mit einer Schalteinrichtung (3a,3b) zusammenwirken.

**5.** Vorrichtung (8) nach Anspruch 3 oder 4,
**dadurch gekennzeichnet, dass**
eine der Schalteinrichtungen (3b) gegensinnig geschaltete Thyristoren aufweist, wobei die andere Schalteinrichtung (3a) ein mechanischer Schalter ist.

**6.** Vorrichtung (8) nach einem der vorhergehenden Ansprüche,
**gekennzeichnet durch**
einen in Reihe zur Regelspule (2) geschalteten Kondensator (40), der mittels einer parallel zum Kondensator (40) in einem Kondensatorparallelzweig (41) angeordneten Kondensatorschalteinheit (42) überbrückbar ist.

**7.** Vorrichtung (8) nach Anspruch 6,
**dadurch gekennzeichnet, dass**
in dem Kondensatorparallelzweig (41) eine Spule vorgesehen ist.

**8.** Vorrichtung (8) nach einem der Ansprüche 6 oder 7,
**gekennzeichnet durch**
eine Filtereinheit (45), die parallel zu einem die Regelspule (2) und den Kondensator (40) in Reihenschaltung aufweisenden Reihenzweig angeordnet ist.

**Claims**

**1.** Apparatus (8) for adjustment of the impedance of a high-voltage line (9) which carries an alternating current and comprises a plurality of phases, having at least one control coil (2) which can be inserted into the high-voltage line (9) connected in series, and having at least one switching device (3) which is in each case associated with one control coil (2), with a control unit (4) being provided in order to control each switching device (3) in such a manner that the effective reactance of the control coil (2) in the apparatus (8) can be adjusted by the switching of the switching device (3),
**characterized in that**
each switching device (3) is arranged in a parallel path (5) in parallel with the control coil (2) associated with it, with the control unit (4) having a zero-crossing unit (12), which is connected to current sensors (14), in order to verify a zero crossing of the alternating current, and has at least one trigger unit (13, 13a, 13b) which is connected to a trigger angle transmitter (19), and with the trigger angle transmitter (19) being connected to a current sensor (14) in order to measure the alternating current, and is connected to a voltage sensor (22) in order to measure the voltage on the high-voltage line (9) with respect to the ground potential or with respect to the voltages between the phases, with the control unit (4) having a read only memory element which is provided for storage of control parameters, with at least one matching unit (25, 26, 33) being provided in order to detect discrepancies between the control parameters and the measured values from the current sensor (14) and/or the voltage sensor (22), or between the control parameters and measurement variables which are calculated from the measured values from the current sensor and/or voltage sensor.

**2.** Apparatus (8) according to claim in Claim 1,
**characterized in that**
at least one switching device (3) comprises thyristors (10) connected in opposite senses.

**3.** Apparatus (8) according to one of the preceding claims,
**characterized in that**
two control coils (2) are provided, which are arranged in series and each have a switching device (3), which is arranged in the associated parallel path (5), connected in parallel with it.

**4.** Apparatus (8) according to Claim 3,
**characterized in that**
the control unit (4) has two trigger units (13a, 13b), which interact with a respective switching device (3a, 3b).

**5.** Apparatus (8) according to Claim 3 or 4,
**characterized in that**
one of the switching devices (3b) has thyristors which are connected in opposite senses, with the other switching device (3a) being a mechanical switch.

**6.** Apparatus (8) according to one of the preceding claims,
**characterized by**
a capacitor (40) which is connected in series with the control coil (2) and can be bridged by means of a capacitor switching unit (42) which is arranged in parallel with the capacitor (40) in a capacitor parallel path (41).

**7.** Apparatus (8) according to Claim 6,
**characterized in that**
a coil is provided in the capacitor parallel path (41).

**8.** Apparatus (8) according to one of Claims 6 or 7,
**characterized by**
a filter unit (45), which is arranged in parallel with a series path in which the control coil (2) and the capacitor (40) are connected in series.

**Revendications**

**1.** Dispositif ( 8 ) de réglage de l'impédance d'une ligne ( 9 ) de haute tension conduisant du courant alternatif et constitué de plusieurs phases, comprenant au moins une bobine ( 2 ) de réglage pouvant être insérée en circuit série dans la ligne ( 9 ) de haute tension et comprenant au moins un dispositif (3 ) de commutation associé respectivement à une bobine ( 2 ) de réglage, une unité ( 4 ) de commande pour la commande de chaque dispositif ( 3 ) de commutation étant prévue, de manière à ce que la réactance, agissant dans le dispositif ( 8 ), de la bobine ( 2 ) de réglage puisse être réglée par la commutation du dispositif ( 3 ) de commutation,
**caractérisé en ce que** chaque dispositif ( 3 ) de commutation est monté, suivant une branche ( 5 ) parallèle, en parallèle à la bobine ( 2 ) de réglage qui lui est associée, l'unité ( 4 ) de commande comportant une unité ( 12 ) de passage par zéro reliée à un indicateur ( 14 ) de courant pour la détection d'un passage par zéro du courant alternatif et au moins une unité ( 13, 13a, 13b ) de déclenchement reliée à un indicateur ( 19 ) d'angle d'amorçage et l'indicateur ( 19 ) d'angle d'amorçage étant relié à un indicateur ( 14 ) de courant, pour la mesure du courant alternatif, et à un indicateur ( 22 ) de tension, pour la mesure de la tension de la ligne ( 19 ) de haute tension par rapport au potentiel de terre ou par rapport aux tensions entre les phases, l'unité ( 4 ) de commande disposant d'un élément de mémoire morte, qui est prévu pour l'enregistrement de paramètres de réglage, dans lequel au moins une unité ( 25, 26, 33 ) d'ajustement, pour la fixation d'écarts entre les paramètres de réglage et les valeurs de mesure de l'indicateur ( 14 ) de courant et/ou de l'indicateur ( 22 ) de tension ou entre les paramètres de réglage et des grandeurs de mesure calculées à partir des valeurs de mesure de l'indicateur de courant et/ou de l'indicateur de tension, étant prévue.

**2.** Dispositif ( 8 ) suivant la revendication 1,
**caractérisé en ce qu'**au moins un dispositif ( 3 ) de commutation est constitué de thyristors ( 10 ) montés tête bêche.

**3.** Dispositif ( 8 ) suivant les revendications précédentes,
**caractérisé en ce qu'**il est prévu deux bobines ( 2 ) de réglage, qui sont montées en série et qui ont respectivement, suivant un circuit en parallèle en soi, un dispositif ( 3 ) de commutation monté dans la branche ( 5 ) parallèle associée.

**4.** Dispositif ( 8 ) suivant la revendication 3,
**caractérisé en ce que** l'unité ( 4 ) de commande comporte deux unités ( 13a, 13b ) de déclenchement, qui coopèrent respectivement avec un dispositif ( 3a, 3b ) de commutation.

**5.** Dispositif ( 8 ) suivant la revendication 3 ou 4,
**caractérisé en ce que** l'un des dispositifs ( 3b ) de commutation comporte des thyristors montés tête bêche, l'autre dispositif ( 3 ) de commutation étant un commutateur mécanique.

**6.** Dispositif ( 8 ) suivant l'une des revendications précédentes,
**caractérisé par** un condensateur ( 40 ), qui est monté en série avec la bobine ( 2 ) de réglage et qui peut être shunté au moyen d'une unité ( 42 ) de commutation de condensateur montée en parallèle au condensateur ( 40 ) dans une branche ( 41 ) en parallèle du condensateur.

7. Dispositif ( 8 ) suivant la revendication 6,
   **caractérisé en ce qu'**une bobine est prévue dans la branche ( 41 ) en parallèle du condensateur.

8. Dispositif ( 8 ) suivant l'une des revendications 6 ou 7,
   **caractérisé par** une unité ( 45 ) de filtrage, qui est montée en parallèle à une branche comportant en circuit série la bobine ( 2 ) de réglage et le condensateur ( 40 ).

## FIG 1
(Stand der Technik)

## FIG 2

FIG 3a

FIG 3b

FIG 3c

FIG 3d

FIG 3e

FIG 4

$X_{SUM} / X_{RSP}$

FIG 5a $\quad \square V_{SUM} \quad \circ V_G \qquad \alpha = 10$

FIG 5b $\quad \square V_{SUM} \quad \circ V_G \qquad \alpha = 20$

FIG 5c $\quad \square V_{SUM} \quad \circ V_G \qquad \alpha = 30$

FIG 5d $\quad \square V_{SUM} \quad \circ V_G \qquad \alpha = 45$

FIG 5e $\quad \square V_{SUM} \quad \circ V_G \qquad \alpha = 60$

FIG 6a

α

FIG 6b

$V_{SUM}(kV)$

FIG 6c

$I_{Leit}(kA)$

FIG 6d

$P_W(kA)$

## FIG 7

$V_X / V_{SUM}$

α

## FIG 8

FIG 9

FIG 10

FIG 11

FIG 12

FIG 13

FIG 14

## FIG 15a

## FIG 15b

FIG 16

FIG 17

## FIG 18

## FIG 19

FIG 20

## FIG 21

$X_{ASC}$

## FIG 22

$X_{TRIC}$

## FIG 23

$X_{SUM} / X_{MAX}$

FIG 24

**EP 1 664 961 B1**

**IN DER BESCHREIBUNG AUFGEFÜHRTE DOKUMENTE**

**In der Beschreibung aufgeführte Patentdokumente**

- DE 3787335 T2

- US 6274851 B1